Europäisches Patentamt

European Patent Office

Office européen des brevets

(11) Numéro de publication: **0 410 863 A1**

## (12) DEMANDE DE BREVET EUROPEEN

(21) Numéro de dépôt: **90402111.0**

(22) Date de dépôt: **23.07.90**

(51) Int. Cl.⁵: **H01S 3/09**

(30) Priorité: **25.07.89 FR 8909991**

(43) Date de publication de la demande:
**30.01.91 Bulletin 91/05**

(84) Etats contractants désignés:
**DE FR GB**

(71) Demandeur: **COMMISSARIAT A L'ENERGIE ATOMIQUE Etablissement de Caractère Scientifique Technique et Industriel 31/33, rue de la Fédération F-75015 Paris(FR)**

(72) Inventeur: **Etievant, Claude**
**44 rue Saint Charles**
**F-78000 Versailles(FR)**
Inventeur: **Wilhelmsson, Hans**
**Fridkullagatan 27 B**
**S-41262 Goteborg(SE)**

(74) Mandataire: **Signore, Robert et al**
**c/o BREVATOME 25, rue de Ponthieu**
**F-75008 Paris(FR)**

(54) **Laser à électrons libres, à onduleur en milieu gazeux, et procédé d'utilisation de ce laser.**

㊼ Le laser comprend une enceinte (22) destinée à être traversée par un faisceau d'électrons préalablement accélérés, un onduleur (44) qui crée dans cette enceinte un champ magnétique périodique avec lequel interagit le faisceau d'électrons et des moyens (54) pour remplir l'enceinte d'un gaz formé d'atomes ou de molécules possédant au moins une raie de résonance à une fréquence déterminée. Le laser est accordé sur cette raie de résonance, ce qui permet au laser de produire une lumière de fréquence proche de cette fréquence déterminée.

Application à la production de rayonnements de courtes longueurs d'ondes.

FIG. 5

EP 0 410 863 A1

# LASER A ELECTRONS LIBRES, A ONDULEUR EN MILIEU GAZEUX, ET PROCEDE D'UTILISATION DE CE LASER

La présente invention concerne un laser à électrons libres et un procédé d'utilisation de ce laser. Elle trouve des applications dans de nombreux domaines tels que la chimie, les télécommunications et la chirurgie.

On sait qu'un laser à électrons libres est un laser à rendement élevé, accordable en longueur d'onde et capable d'émettre un rayonnement électromagnétique de grande puissance et utilise à cet effet la propriété d'un faisceau d'électrons relativistes, d'émettre un rayonnement électromagnétique cohérent lorsqu'il est soumis à un champ magnétique statique, mais spatialement périodique, engendré par un dispositif appelé "onduleur" (ou "wiggler" selon la terminologie anglo-saxonne).

Un tel laser peut être un amplificateur et fonctionner sans cavité optique, ou un oscillateur auquel cas une cavité optique est nécessaire pour piéger le rayonnement émis par le faisceau d'électrons relativistes.

Divers lasers à électrons libres sont décrits dans un article (1) de C.W. ROBERTSON et al., intitulé "A review of free-electron lasers" et publié dans la revue Physics of fluids, B1, janvier 1989.

Les lasers à électrons libres connus présentent l'inconvénient de nécessiter des faisceaux d'électrons de très grande énergie, et donc des accélérateurs coûteux et des dispositifs de protection volumineux, pour obtenir des rayonnements électromagnétiques de courtes longueurs d'onde.

On connaît également par un article (2) de R.H. PANTELL et al., Journal of the optical society of America B: optical physics, vol.6, n°5, mai 1989, p.1008 à 1014 et par un article (3) de M.B. REID et al., IEEE Journal of quantum electronics, vol.5, n°1, janvier 1989, p.84 à 87, articles sur lesquels on reviendra par la suite, un laser à électrons libres dont on modifie la condition d'accord par introduction d'un gaz dans l'onduleur du laser.

Cependant, une modification appréciable de la condition d'accord nécessite une forte pression de gaz, ce qui oblige à séparer matériellement l'onduleur de la canalisation reliant ce dernier à l'accélérateur d'électrons qui est associé au laser.

La présente invention a pour but de remédier aux inconvénients précédents.

Elle a pour objet un laser à électrons libres, comprenant :
- une enceinte principale, destinée à être traversée par un faisceau d'électrons préalablement accélérés,
- un onduleur qui crée dans cette enceinte principale un champ magnétique périodique avec lequel interagit le faisceau d'électrons, et

- des moyens pour remplir l'enceinte principale d'un gaz formé d'atomes ou de molécules possédant au moins une raie de résonance à une fréquence déterminée,
laser caractérisé en ce qu'il comprend en outre des moyens pour accorder le laser sur cette raie de résonance, ce qui permet au laser de produire une lumière de fréquence proche de cette fréquence déterminée.

Comme on le verra mieux par la suite, l'utilisation d'un tel gaz, moyennant une densité (c'est-à-dire un nombre d'atomes ou de molécules par unité de volume) suffisamment importante, permet d'augmenter suffisamment la partie réelle de l'indice optique du milieu contenu dans la cavité, pour obtenir, sans modifier l'énergie du faisceau d'électrons, un "point" de fonctionnement supplémentaire du laser, à une fréquence supérieure à la fréquence d'accord obtenue dans le cas où la cavité est vide (l'indice valant 1 dans ce dernier cas), en supposant ladite fréquence déterminée supérieure à cette fréquence d'accord, ce qui est quasiment toujours le cas.

Ainsi, on n'a plus besoin d'électrons de grande énergie pour obtenir un rayonnement de courte longueur d'onde et l'on peut réaliser un laser à électrons libres de puissance, apte à émettre un rayonnement infrarouge, visible ou même ultraviolet en utilisant simplement un faisceau d'électrons dont l'énergie est de l'ordre de 1 à quelques MeV.

Il est alors possible de concevoir des sources de rayonnement compactes, puissantes et de coût raisonnable, bien adaptées à une utilisation industrielle, ce qui n'est pas le cas des lasers à électrons libres connus.

L'invention fonctionne d'autant mieux que la raie de résonance est intense et donc que le module du moment dipolaire des atomes ou des molécules, pour la transition entre niveaux électroniques que l'on utilise, est élevé.

Selon un mode de réalisation particulier du laser objet de l'invention, les moyens pour remplir de gaz l'enceinte principale comprennent des moyens d'alimentation contrôlée de cette enceinte principale en ledit gaz.

L'enceinte principale peut être alimentée en gaz en l'une de ses extrémités.

Cette extrémité peut être celle en laquelle le faisceau d'électrons quitte l'enceinte principale.

De préférence, le faisceau d'électrons provenant d'un accélérateur d'électrons, le laser comprend en outre une enceinte de pompage différentiel qui relie l'enceinte principale à une canalisation faisant partie de l'accélérateur, afin de ne pas polluer, par le gaz, l'accélérateur d'électrons qui, lui, est sous vide.

Le laser objet de la présente invention peut comprendre en outre des moyens de récupération du faisceau d'électrons après que celui-ci a quitté l'enceinte principale.

Alors, de préférence, le laser comprend en outre une autre enceinte de pompage différentiel qui relie l'enceinte principale aux moyens de récupération du faisceau d'électrons, afin de ne pas polluer l'enceinte principale par des ions susceptibles de provenir des moyens de récupération. En effet, lorsque ces derniers comprennent par exemple une cible, cette cible émet des ions rétrodiffusés sous l'impact du faisceau d'électrons et ladite autre enceinte de pompage différentiel empêche ces ions rétrodiffusés d'aller dans l'enceinte principale.

La présente invention concerne également un procédé d'utilisation d'un laser à électrons libres, comprenant :
- une enceinte principale, traversée par un faisceau d'électrons préalablement accélérés, et
- un onduleur qui crée dans cette enceinte principale un champ magnétique périodique avec lequel interagit le faisceau d'électrons, procédé selon lequel on remplit l'enceinte principale d'un gaz formé d'atomes ou de molécules possédant au moins une raie de résonance à une fréquence déterminée, procédé caractérisé en ce qu'on accorde le laser sur cette raie de résonance, ce qui permet au laser de produire une lumière de fréquence proche de cette fréquence déterminée.

De préférence, on accorde le laser sensiblement sur la longueur d'onde correspondant au maximum de la courbe représentant les variations de (nr-1) en fonction de la longueur d'onde au voisinage de la résonance, où nr est la partie réelle de l'indice de réfraction du gaz.

Enfin, le gaz peut être un gaz actif dans lequel une inversion de population de niveaux électroniques est réalisable mais, de préférence, le gaz est un gaz passif dans lequel une inversion de population de niveaux électroniques est irréalisable, ce qui simplifie la mise en oeuvre de la présente invention.

Cette dernière sera mieux comprise à la lecture de la description suivante, donnée à titre purement indicatif et nullement limitatif, en référence aux dessins annexés sur lesquels :
- la figure 1 est une vue schématique d'un laser à électrons libres connu,
- la figure 2 est un graphique permettant de déterminer le vecteur d'onde et la fréquence du rayonnement émis par un tel laser connu,
- la figure 3a représente la courbe des variations de nr-1 en fonction de (w-wo)/wo, où nr, wo et w représentent respectivement la partie réelle de l'indice optique d'un gaz utilisé dans un laser conforme à la présente invention, la fréquence centrale de la raie de résonance du gaz et une fréquence proche de wo,
- la figure 3b représente la courbe des variations de ni en fonction de (w-wo)/wo, où ni représente la partie imaginaire de l'indice optique de ce gaz,
- la figure 4 illustre la modification du graphique de la figure 2 lorsqu'un tel gaz est utilisé conformément à la présente invention,
- la figure 5 est une vue en coupe schématique d'un laser conforme à l'invention et
- la figure 6 est une vue en coupe schématique de ce laser, suivant un plan perpendiculaire au plan de la figure 5, et
- la figure 7 représente la courbe des variations de nr-1 en fonction de la longueur d'onde L.

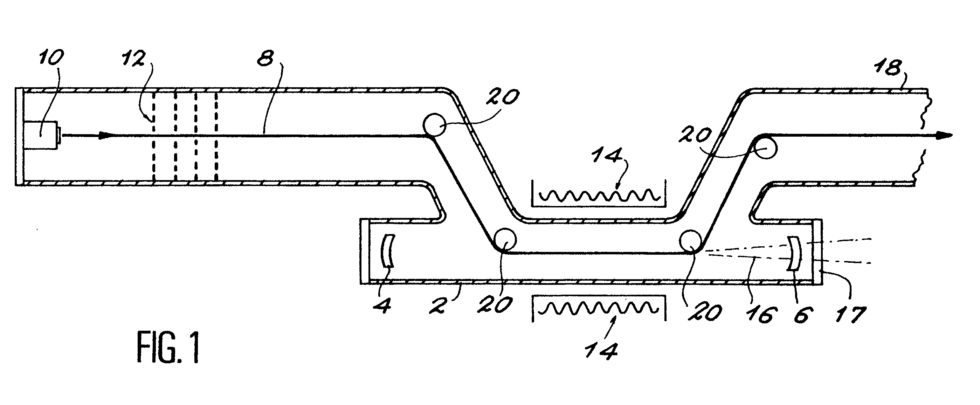

Sur la figure 1, on a représenté schématiquement un laser à électrons libres connu, qui comprend une chambre à vide 2 aux deux extrémités de laquelle sont placés des miroirs 4, 6. L'un de ces miroirs est semi-transparent. Un faisceau d'électrons relativistes 8, issu d'un accélérateur d'électrons, comprenant un canon à électrons 10 et des sections accélératrices 12, est dévié vers la chambre à vide dans laquelle il interagit avec un champ magnétique périodique engendré par un onduleur magnétique 14 pour produire un rayonnement 16 qui traverse en partie le miroir semi-transparent 6 puis une fenêtre 17. Après avoir traversé la zone d'interaction le faisceau d'électrons 8 est dévié hors de la chambre 2 pour se propager dans une canalisation sous vide 18. Les diverses déviations du faisceau d'électrons vers la chambre à vide 2 et hors de celle-ci sont obtenues à l'aide d'aimants ou de bobines magnétiques appropriées 20.

Dans un laser de ce type, le milieu émetteur est constitué par le faisceau d'électrons relativistes. La condition d'accord du laser à électrons libres s'écrit :

$$l3 = l1(2g^2)^{-1}(1 + M^2/2) \qquad (1)$$

avec : $l1$ : longueur d'onde de l'onduleur magnétique

$l3$ : longueur d'onde du rayonnement émis

$g = (m.c^2)/(mo.c^2)$

$M = e.B1.l1.(2.pi.mo.c)^{-1}$

$B1$ : induction magnétique engendrée par l'onduleur

$c$ : vitesse de la lumière dans le vide

$e$ : charge de l'électron

$mo$ : masse au repos de l'électron

$m$ : masse de l'électron (en mouvement)

$pi$ : nombre bien connu valant environ 3, 14.

La relation (1) traduit la condition de synchronisme permettant un couplage résonant entre les fluctuations de charge d'espace du faisceau d'électrons, l'onduleur magnétique et l'onde électromagnétique émise. Cette relation (1) montre que deux paramètres permettant de faire varier l3 sont la longueur d'onde l1 de l'onduleur et l'énergie E du faisceau d'électrons, mesurée par le paramètre g.

Dans la pratique, pour un laser à électrons libres déterminé, l1 constitue un paramètre de construction de l'onduleur magnétique et de ce fait reste fixe. La technologie actuelle des onduleurs magnétiques permet de donner à l1 une valeur du domaine allant de 1 à quelques centimètres.

Le seul paramètre véritablement libre pour accorder le laser est donc l'énergie des électrons.

En prenant l1 = 2cm et B1 = 0,1T, on voit que les valeurs de g à obtenir sont :
g≧10, soit E≧5,1 MeV, pour avoir l3≧100 micromètres
g≧100, soit E≧51 MeV, pour avoir l3≧1 micromètre
g≧316, soit E≧161 MeV, pour avoir l3≧0,1 micromètre

Ces valeurs montrent la nécessité d'utiliser des faisceaux électroniques très énergétiques, de l'ordre de 50 MeV ou plus pour atteindre le proche infrarouge, le visible ou l'ultraviolet.

Il est possible d'interpréter la relation (1) comme une condition de synchronisme entre trois ondes couplées non linéairement :
- l'onduleur magnétique est caractérisé par une fréquence (ou plus exactement une pulsation) w1 = 0 et par une longueur d'onde l1,
- les fluctuations de densité du faisceau sont caractérisées par une fréquence w2 et par une longueur d'onde l2, et
- l'onde électromagnétique produite est caractérisée par une fréquence w3 et par une longueur d'onde l3.

Cette condition de synchronisme s'écrit :
$$w3 = w2 + w1 \text{ et } K3 = K2 + K1 \qquad (2)$$
où K1, K2, K3 sont les nombres d'onde mesurés algébriquement suivant l'axe du faisceau dans la chambre à vide, avec :
$$|K1| = 2pi/l1 \quad |K2| = 2pi/l2 \quad |K3| = 2pi/l3$$
La propagation des ondes se fait suivant cet axe.

Aux relations (2), il faut adjoindre les trois relations de dispersion suivantes :
- pour l'onduleur :
$$w1 = 0 \text{ et } K1 = \pm 2 pi/l1 \qquad (3)$$
- pour le mode plasma du faisceau :
$$w2 = K2.b.c \pm wp \qquad (4)$$
- pour l'onde électromagnétique :
$$w3 = K3.c \qquad (5)$$
relations dans lesquelles le produit b.c et le nombre wp représentent respectivement la vitesse des électrons du faisceau et la fréquence propre de ce faisceau, avec :
$$wp^2 = 4 pi.N.e^2.mo^{-1}.g^{-1}$$
On notera que wp est très inférieur à w2 de sorte que w2 est peu différent de K2.b.c.

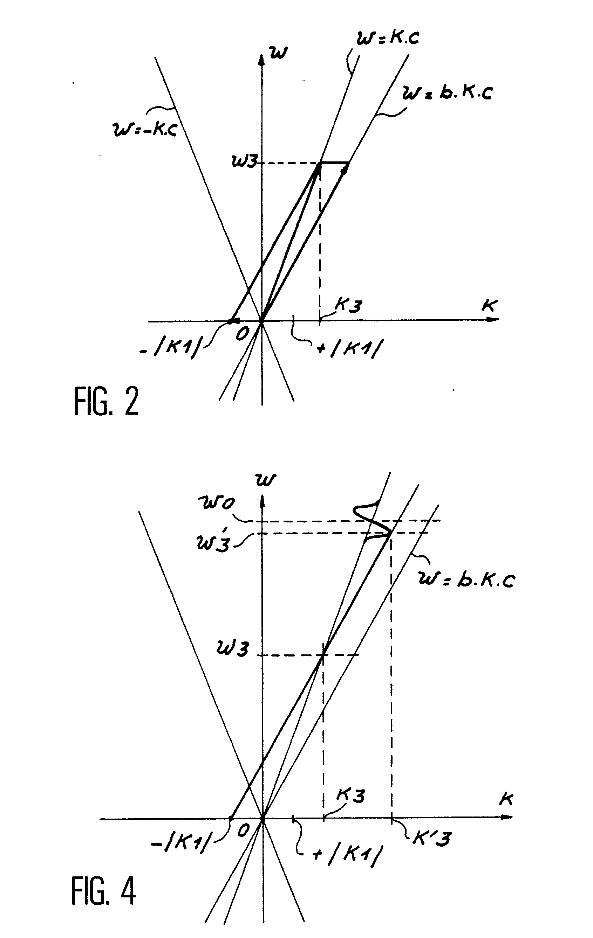

La figure 2 indique une construction graphique permettant de déterminer le vecteur (w3, K3) représentatif de l'onde électromagnétique émise par le laser à électrons libres et satisfaisant l'ensemble formé par la condition de synchronisme (2) et les relations de dispersion (3), (4), (5).

Cette construction graphique est réalisée dans un repère cartésien (w, K). Les ondes électromagnétiques sont représentées par les deux droites w = ±K.c. Les modes plasma du faisceau sont représentés par la droite w = b.K.c ± wp que l'on a confondue avec la droite w = b.K.c puisque wp est très inférieur à w2.

L'onduleur est une perturbation magnétique, périodique et stationnaire dans le repère du laboratoire. Cette perturbation est représentée par les deux ondes (w1 = 0, + |K1|) et (w1 = 0, -|K1|).

Dans ces conditions, le vecteur (w3, K3) représentatif de l'onde émise par le laser est la somme des deux vecteurs (w1,-|K1|) et (w2, K2). On vérifie que la construction graphique de la figure 2 conduit rigoureusement à la solution définie par l'équation (1) en supposant M très inférieur à 1, ce qui est en général le cas.

Il est possible de modifier la relation (5) de dispersion de l'onde électromagnétique en "chargeant" le milieu émetteur d'oscillateurs résonnants constituées par un gaz d'atomes ou de molécules possédant au moins une raie de résonance, de préférence intense. On peut par exemple utiliser la raie jaune de la vapeur de sodium, dont la longueur d'onde vaut 589 nm.

Le principe de la construction représentée sur la figure 2 reste valable dans ce cas mais il faut maintenant remplacer la relation de dispersion (5) par une relation appropriée, traduisant les modifications de la relation (5) au voisinage de la raie de résonance atomique ou moléculaire.

Au voisinage d'une telle raie de résonance, dont la fréquence centrale est notée wo, l'indice de réfraction n du gaz est un nombre complexe dont la partie réelle est notée nr et dont la partie imaginaire est notée ni, avec
$$nr-1 = -(1/4)wp(i,j)^2.wo^{-2}.(D/wo).F^{-1} \qquad (6)$$
$$ni = (1/4)wp(i,j)^2.wo^{-2}.(v/wo).F^{-1} \qquad (7)$$
$$\text{avec : } F = (D^2/wo^2) + (v^2/wo^2) \qquad (8)$$

Dans ces formules v est la constante caractéristique d'amortissement, D est égal à w-wo et wp(i,j) est la fréquence "plasma" atomique ou moléculaire pour la transition considérée dans le gaz, d'un niveau électronique déterminé i à un autre niveau électronique déterminé j. On peut écrire :
$$wp(i,j)^2 = |Mij|^2.(Ni-Nj).(6Eo(h/2pi))^{-1}$$
formule dans laquelle h, Eo, Ni, Nj et |Mij| représentent respectivement la constante de PLANCK, la constante diélectrique du vide, la population du niveau i dans le gaz considéré, la population du niveau j dans ce gaz et le module du moment dipolaire pour la transition de i vers j.

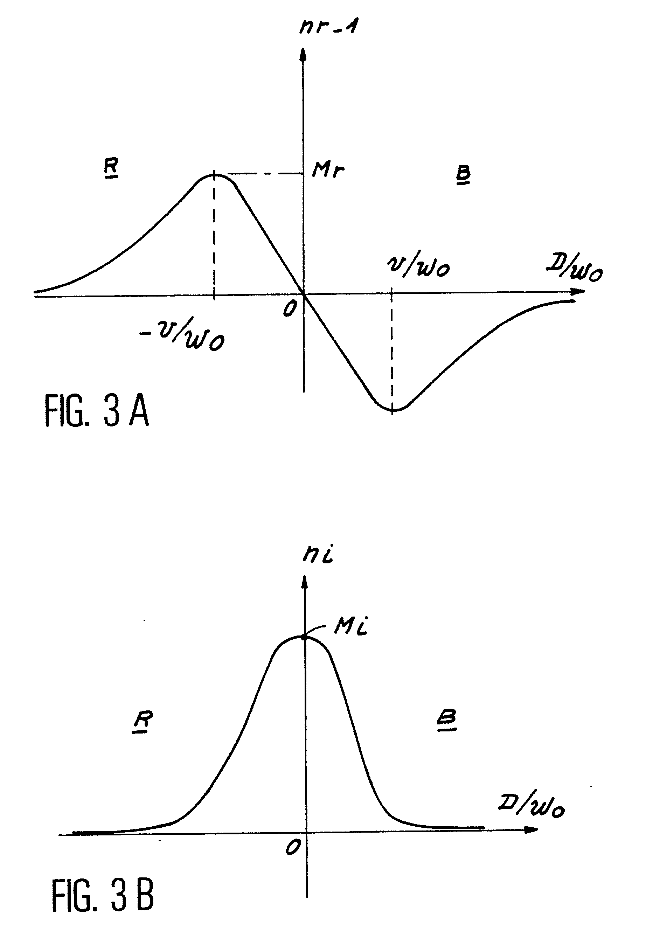

Sur les figures 3A et 3B on a représenté les variations respectives de nr-1 et de ni, en fonction de D/wo, pour une fréquence w voisine de wo.

On constate en particulier les faits suivants :
Si $wp(i,j)^2$ est positif, c'est-à-dire si Ni est supérieur à Nj (pas d'inversion de population), nr-1 passe par un maximum Mr pour D = -v, avec :
$$Mr = (1/4)wp(i,j)^2.wo^{-2}.(wo/2v)$$
et, plus généralement, nr est supérieur à 1 du côté "rouge", noté R, de la résonance (D<0). Par conséquent, $K = w.nr.c^{-1}$ prend une valeur supérieure à la valeur correspondante dans le vide (où n = 1). On peut écrire que l'accroissement de nombre d'onde qui en résulte est sensiblement égal à :
$$dK = (1/8).wp(i,j)^2.(v.c)^{-1} \quad (9)$$

Du côté "bleu" (noté B) de la résonance, on observe une diminution de l'indice nr, ce qui correspond à une augmentation de la vitesse de phase de l'onde et à une diminution de K.

En wo la partie réelle de l'indice s'annule et la partie imaginaire passe par un maximum Mi, ce qui traduit un maximum d'absorption à la fréquence wo. Le nombre Mi est égal à :
$$(1/4)wp(i,j)^2.wo^{-1}.(wo/v)$$

On peut également considérer le cas d'un gaz dans lequel une inversion de population aurait été effectuée, ce qui se traduirait par Ni<Nj d'où $wp(i,j)^2<0$.

Une telle situation se rencontre dans les lasers à gaz. Le gaz est alors dit actif. Dans ce cas, on constate, à l'inverse du cas précédent, que la partie imaginaire de l'indice de réfraction, notée ni, devient négative, ce qui signifie que le gaz devient émissif au voisinage de wo. De plus, du côté "rouge" R de la résonance, la partie réelle nr de l'indice devient inférieure à 1 (ondes rapides telles que w/K>c) et, du côté "bleu" B de la résonance, elle prend des valeurs supérieures à 1(ondes lentes telles que w/K<c).

On voit donc tout l'intérêt que présente l'augmentation d'indice dnr telle que :
$$dnr = nr-1>0.$$

Cette augmentation a lieu du côté "rouge" de la résonance dans le cas d'un gaz passif $(wp(i,j)^2>0)$ et du côté "bleu" de la résonance dans le cas d'un gaz actif $(wp(i,j)^2<0)$.

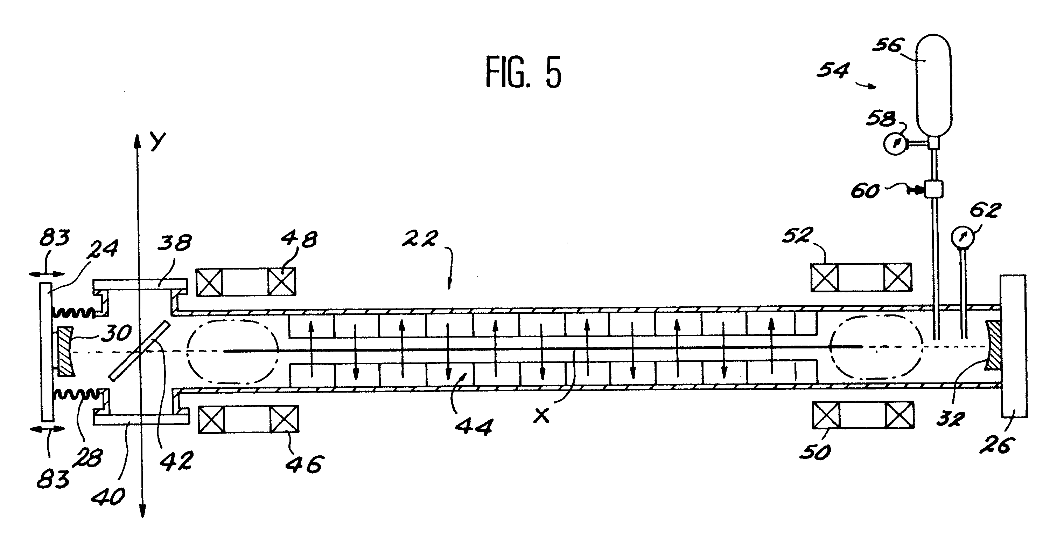

Cette variation d'indice au voisinage de la résonance wo permet en particulier d'établir de nouveaux domaines de synchronisme des lasers à électrons libres comme le montre la figure 4.

Sur cette figure 4, on a représenté, comme sur la figure 2, la construction graphique permettant de déterminer les points représentatifs tels que (w3, K3), pour lesquels les conditions de synchronisme sont satisfaites.

La courbe de dispersion des ondes électromagnétiques fait maintenant apparaître la variation dK mentionnée plus haut, au voisinage de la raie de résonance considérée (w = wo).

On voit en particulier que la présence de cette résonance fait apparaître un nouveau point de synchronisme (w'3, K'3) pour lequel le laser est accordé. Ce point se situe sur le côté "rouge" de la résonance (w'3<wo) dans le cas d'un gaz passif $(wp(i,j)^2>0)$ et du côté "bleu" (w'3>wo) dans le cas d'un gaz actif $(wp(i,j)^2<0)$.

On notera que w'3 est proche de wo. Donc, en choisissant un gaz tel que wo soit supérieur à w3 (la plupart des gaz utilisables dans l'invention répondent à cette condition), l'invention permet effectivement une émission de lumière à une fréquence supérieure à celle qui est obtenue avec un laser à électrons libres classique (fonctionnant dans le vide), et ce pour une même énergie $mc^2$ du faisceau d'électrons.

La condition d'existence d'une solution à la condition de synchronisme en présence d'oscillateurs résonants s'écrit simplement en exprimant que la courbe de dispersion des ondes électromagnétiques, courbe qui est modifiée par la résonance wo, coupe la droite représentative du faisceau d'électrons (w = b.K.c) décalée par la translation de vecteur (w1 = 0, K1 = -|K1|). La condition s'écrit donc :
$$dK \geq (w'3/c)(b^{-1}-1)-|K1| \quad (10)$$
où dK est défini par la relation (9).

Par ailleurs, w'3 est voisin de wo, ce qui permet d'écrire l'inégalité (10) sous la forme :
$$wp(i,j)^2 \geq 8v.c.((wo/c).(b^{-1}-1)-|K1|) \quad (11)$$

L'inégalité (11) permet en particulier d'évaluer la densité minimale du gaz constitué d'atomes ou de molécules résonnantes, c'est-à-dire le nombre minimal de ces atomes ou molécules par unité de volume, permettant une variation d'indice suffisante pour que le laser à électrons libres conforme à l'invention soit susceptible d'émettre à une fréquence w'3 voisine de la fréquence de résonance wo.

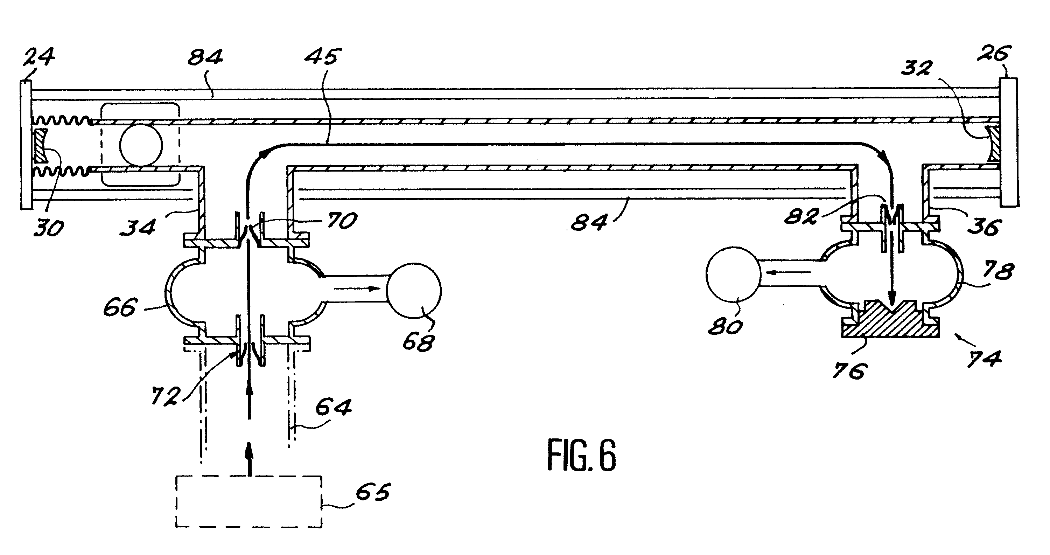

Sur les figures 5 et 6, on a représenté schématiquement un mode de réalisation particulier du laser à électrons libres objet de l'invention. Ces figures 5 et 6 sont des vues en coupe suivant des plans perpendiculaires l'un à l'autre.

Le laser représenté sur ces figures comprend une enceinte principale 22 de forme allongée suivant un axe X. En ses deux extrémités, l'enceinte principale est fermée par des couvercles ou brides 24 et 26 ("flanges" dans les publications en langue anglaise). En fait, du côté du couvercle 24, la liaison de l'enceinte à ce dernier se fait par l'intermédiaire d'un soufflet 28 déformable parallèlement à l'axe X.

Le laser comprend également deux miroirs focalisants 30 et 32 qui ont tous deux comme axe, l'axe X. Ces miroirs sont respectivement portés par les faces internes des couvercles 24 et 26 et sont prévus pour réfléchir, suivant l'axe X, la lumière engendrée dans l'enceinte principale 22 du laser.

De plus, l'enceinte principale 22 est respectivement raccordée, en ses deux extrémités, à deux canalisations 34 et 36 (figure 6) dont les axes sont parallèles l'un à l'autre et sont perpendiculaires à l'axe X.

La canalisation 34 est située du côté du soufflet 28.

Dans la partie de l'enceinte principale 22, comprise entre ce soufflet et la canalisation 34, l'enceinte principale 22 est munie de deux fenêtres 38 et 40 qui sont diamétralement opposées par rapport à l'axe X et ont un axe commun Y perpendiculaire à X et aux axes des canalisations 34 et 36. Les fenêtres sont transparentes au rayonnement engendré par le laser. Une lame d'extraction 42 qui, dans le plan de la figure 5, est à l'intersection des axes X et Y et à 45° de chacun de ceux-ci, est prévue pour renvoyer ce rayonnement suivant l'axe Y, à travers les deux fenêtres.

Dans la portion de l'enceinte principale 22, comprise entre les deux canalisations 34 et 36, le laser comporte un onduleur magnétique 44 dont la longueur peut être de l'ordre de 1 m.

Cet onduleur comprend par exemple, suivant l'axe X et à l'intérieur de l'enceinte principale 22, une succession de paires d'aimants en regard l'un de l'autre, succession qui crée des champs magnétiques qui sont parallèles à Y et dont les sens sont alternés.

Le faisceau d'électrons 45 destiné à interagir avec le champ magnétique périodique engendré par l'onduleur 44 traverse la canalisation 34 avant de pénétrer dans l'enceinte principale 22 puis traverse cette dernière et en ressort en pénétrant dans la canalisation 36. A cet effet deux paires de bobines de déflexion 46-48 et 50-52, alimentées par des moyens non représentés, sont respectivement prévues à la jonction entre la canalisation 34 et l'enceinte principale 22 et à la jonction entre cette dernière et la canalisation 36. Les deux bobines de chaque paire ont un même axe qui est parallèle à l'axe Y et sont de part et d'autre de l'enceinte principale 22 comme on le voit sur la figure 5.

Au moins en regard des bobines, l'enceinte principale 22 est faite d'un matériau amagnétique.

Conformément à l'invention, le laser représenté sur les figures 5 et 6 comprend des moyens 54 d'alimentation de l'enceinte principale 22 en un gaz d'atomes ou de molécules possédant une raie de résonance intense. Ces moyens 54 comprennent par exemple un réservoir 56 contenant le gaz, muni d'un manomètre 58 et relié à l'enceinte principale 22 par une canalisation pourvue d'un robinet de précision à pointeau 60 et aboutissant à l'enceinte principale 22, par exemple dans la zone de cette dernière qui est comprise entre la jonction avec la canalisation 36 et le couvercle 26. Dans cette zone, une jauge de mesure de pression 62 est également montée sur l'enceinte principale 22.

La pression dans l'enceinte principale 22 peut être comprise entre environ $10^{-5}$ Pa et $10^{-1}$ Pa.

La canalisation 34 communique par l'intermédiaire d'une enceinte de pompage différentiel 66 avec une canalisation 64 dans laquelle est fait le vide, qui fait partie de l'accélérateur d'électrons 65 et qui est traversée par le faisceau d'électrons relativistes fournis par cet accélérateur. L'enceinte 66 est munie de moyens de pompage appropriés 68 et des diaphragmes réducteurs de vitesse de pompage 70 et 72 sont respectivement prévus entre l'enceinte 66 et la canalisation 34 et entre la canalisation 64 et l'enceinte 66. Cette enceinte 66, munie des moyens 68 et des diaphragmes 70 et 72, est prévue pour préserver le vide dans la canalisation 64.

A la sortie de la canalisation 36, le faisceau d'électrons est envoyé sur des moyens de récupération de faisceau 74, par exemple constitués par une cible appropriée 76.

Cette cible est reliée de façon étanche à la canalisation 36 par l'intermédiaire d'une autre enceinte de pompage différentiel 78 munie de moyens de pompage 80. Un diaphragme réducteur de vitesse de pompage 82 est prévu entre la canalisation 36 et l'enceinte 78. L'enceinte 78, munie des moyens de pompage 80 et du diaphragme 82, est prévue pour empêcher la pollution de l'enceinte principale 22 par le matériau de la cible 76, matériau qui est susceptible d'être éjecté de celle-ci sous l'impact du faisceau d'électrons.

Lorsque le laser fonctionne, on règle la distance entre les miroirs 30 et 32 de façon que l'intensité du faisceau lumineux issu de l'une ou l'autre des fenêtres 38 et 40 soit maximale (la fréquence optique de ce faisceau correspondant alors au maximum de la courbe des variations de nr-1 en fonction de la fréquence, courbe relative au gaz utilisé). Ce réglage est effectué en déplaçant, grâce à des moyens mécaniques à vis symbolisés par des flèches 83 sur la figure 5, le couvercle 24. Lorsque la distance entre les miroirs 30 et 32 est optimale, on fixe cette distance en intercalant entre les couvercles 24 et 26 des barres de silice 84 stabilisées en longueur, prévues pour maintenir l'écart entre les couvercles à la valeur trouvée lors du réglage.

Le laser représenté sur les figures 5 et 6 est de type oscillateur. Pour obtenir un laser de type amplificateur, il suffit de supprimer les miroirs 30 et 32 et la lame 42, de placer, en regard du couvercle 24, une source lumineuse qui émet un faisceau suivant l'axe X et dans le sens de déplacement des électrons dans l'onduleur, la fréquence optique de ce faisceau étant égale à celle qui correspond au maximum de la courbe des variations de nr-1 en fonction de la fréquence (courbe relative au gaz utilisé) et de munir les couvercles ou brides 24 et 26 ("flanges") de fenêtres transparentes à cette fréquence, pour obtenir, à la sortie du couvercle 26, un faisceau amplifié.

De façon avantageuse, le laser objet de l'invention fonctionne avec un gaz passif, ce qui évite d'avoir à réaliser une inversion de population et donc d'avoir à utiliser un gaz ou un mélange de gaz permettant une telle inversion (et présentant par exemple une combinaison d'au moins trois niveaux électroniques comme dans les lasers à gaz).

Cependant le laser objet de l'invention fonctionne également avec un gaz actif dans lequel on doit alors réaliser une inversion de population. Une telle inversion est réalisable par tout moyen du genre de ceux qui sont utilisés dans les lasers à gaz ou même par le faisceau d'électrons qui circule dans l'onduleur.

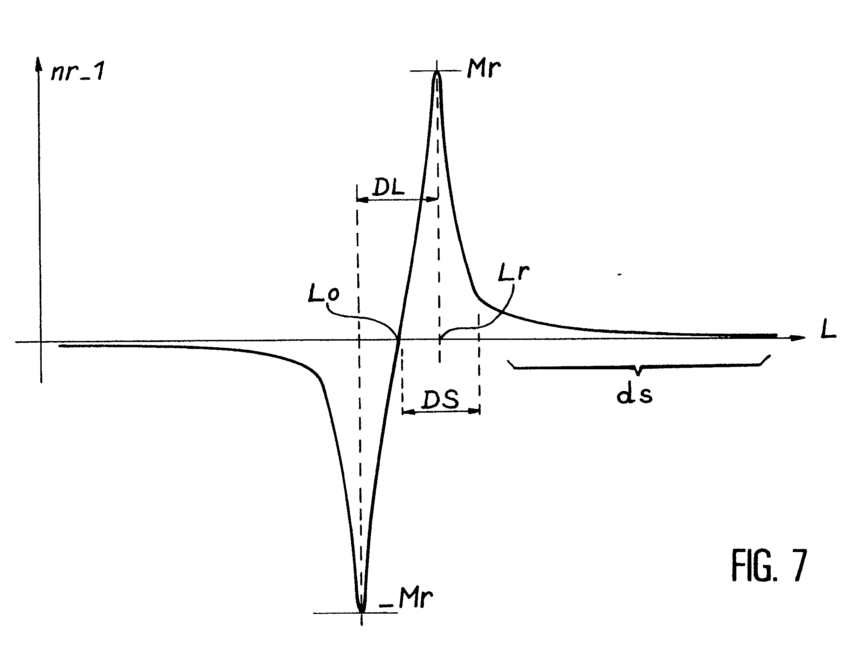

On explique ci-après les différences entre la présente invention et la technique décrite dans l'article (2) de Pantell et al. et l'article (3) de Reid et al., en se référant à la courbe de la figure 7, qui représente les variations de (nr-1) en fonction de L au voisinage de la résonance. Sur cette courbe, qui est en fait du genre de celle de la figure 3A avec, cependant, un axe des abscisses orienté en sens contraire (puisqu'il correspond à des longueurs d'ondes et non plus à des fréquences), Lo est la longueur d'onde centrale de la résonance (Lo = 2pi.c/wo) et DL est la "largeur de raie", différence entre la longueur d'onde Lr relative au maximum (Mr) de la courbe et la longueur d'onde relative au minimum (-Mr) de la courbe.

Pour ce genre de courbe, on se référera au livre "Lasers" de Siegman, University Science Books, p.102-108 ainsi qu'à CRC Handbook of Chemistry and Physics (chapitre "Line Spectra of the Elements").

Dans le laser à électrons libres, qui est décrit dans les articles (2) et (3), la modification de la condition d'accord du laser est obtenue par modification de l'indice de réfraction du milieu gazeux qui remplit la cavité laser, en dehors de la résonance du gaz.

Dans ces articles (2) et (3) est proposée une variation continue d'indice de réfraction, dans un large domaine spectral ds compris entre le proche infrarouge et une longueur d'onde Lmin de l'ordre de 1200Å (120 nm), le gaz étant l'hydrogène pour lequel Lo est égal à 949 Å (94,9 nm).

Les auteurs des articles (2) et (3) ne se placent pas au voisinage de la résonance de l'hydrogène et ne cherchent pas à en exploiter les propriétés.

Puisqu'ils se placent loin des raies de résonance du gaz, ces auteurs ne peuvent obtenir une varation appréciable de l'indice de réfraction du gaz qu'en établissant dans la cavité laser une forte pression de gaz de l'ordre de $10^2$Pa à $10^5$Pa environ.

Comme de telles pressions sont tout à fait incompatibles avec un bon fonctionnement de l'accélérateur d'électrons destiné à l'injection de ces derniers dans le laser à électrons libres, les auteurs des articles (2) et (3) utilisent une séparation matérielle entre l'accélérateur et la cavité du laser à électrons libres.

Cette séparation est réalisée à l'aide d'une membrane de nitrure de bore de 1,3 micromètre d'épaisseur, qui constitue un élément fragile du système du fait de l'échauffement de la membrane, dû au passage du faisceau d'électrons.

Le procédé décrit dans les articles (2) et (3) permet de réaliser un laser accordable dont on fait varier la longueur d'onde en faisant varier la pression du gaz dans la cavité laser.

La présente invention est très différente de la technique décrite dans les articles (2) et (3) puisqu'elle utilise un accord du laser sur la raie (ou l'une des raies) de résonance du gaz, c'est-à-dire sur une longueur d'onde de l'intervalle DS allant de Lr-(DL/2) à Lr+(DL/2), de préférence au centre Lr de cet intervalle.

L'invention fait intervenir les variations très importantes de l'indice de réfraction du gaz au niveau de sa raie de résonance ou de chacune de ses raies de résonance. Pour le raie de résonance ou chaque raie de résonance considérée, la variation d'indice de réfraction est suffisamment grande pour que le laser puisse être accordé sur cette raie, même en établissant dans la cavité laser une très faible pression de gaz qui peut être de l'ordre de $10^{-5}$ à $10^{-1}$ Pa, valeurs très inférieures à celles qui sont utilisées par les auteurs des articles (2) et (3).

Ainsi, dans la présente invention, l'accord du laser se fait à la raie de résonance considérée. Il n'y a pas de variation continue de la raie laser mais, au contraire, un calage sur la raie ou l'une des raies de résonance du gaz introduit dans la cavité laser. Il en résulte un effet de stabilisation de la raie laser et une émission laser très monochromatique.

Dans la présente invention, on peut envisager de faire varier la fréquence d'émission du laser à électrons libres mais cette variation est discontinue puisqu'on passe d'une raie de résonance à une raie voisine du gaz utilisé (à condition que ce dernier ait une pluralité de raies de résonance).

La mise en oeuvre de la présente invention est plus simple que celle de la technique décrite dans les articles (2) et (3). En effet, l'invention peut être mise en oeuvre avec une très faible pression de gaz dans la cavité laser et il est donc très facile d'isoler cette dernière de l'accélérateur. On peut, pour ce faire, utiliser un simple diaphragme dont l'orifice possède un diamètre à peine supérieur à celui du faisceau d'électrons (moins de 1 cm) ou deux diaphragmes semblables au précédent et délimitant un espace de pompage différentiel.

Par ailleurs, la possibilité d'utiliser une faible pression de gaz permet de maintenir plus facilement une étroite distribution de vitesse pour le faisceau d'électrons (du genre distribution de Dirac), puisque les collisions du faisceau d'électrons avec le gaz sont alors $10^5$ à $10^7$ fois plus rares que dans la technique décrite dans les documents (2) et (3).

L'invention peut trouver des applications dans le domaine de la spectroscopie des gaz : analyse de la composition chimique d'un gaz, dissociation sélective de molécules d'un gaz par excitation de résonances convenablement choisies (le gaz circulant dans la cavité laser) et création d'une longueur d'onde spécifique d'un gaz déterminé.

**Revendications**

1. Laser à électrons libres, comprenant :
- une enceinte principale (22), destinée à être traversée par un faisceau (45) d'électrons préalablement accélérés,
- un onduleur (44) qui crée dans cette enceinte principale un champ magnétique périodique avec lequel interagit le faisceau d'électrons, et
- des moyens (54) pour remplir l'enceinte principale d'un gaz formé d'atomes ou de molécules possédant au moins une raie de résonance à une fréquence déterminée,
laser caractérisé en ce qu'il comprend en outre des moyens (28, 83) pour accorder le laser sur cette raie de résonance, ce qui permet au laser de produire une lumière de fréquence proche de cette fréquence déterminée.

2. Laser selon la revendication 1, caractérisé en ce que les moyens (54) pour remplir de gaz l'enceinte principale comprennent des moyens (56, 58, 60) d'alimentation contrôlée de cette enceinte principale en ledit gaz.

3. Laser selon la revendication 2, caractérisé en ce que l'enceinte principale (22) est alimentée en gaz en l'une de ses extrémités.

4. Laser selon l'une quelconque des revendications 1 à 3, caractérisé en ce que, le faisceau d'électrons provenant d'un accélérateur d'électrons (65), le laser comprend en outre une enceinte de pompage différentiel (66) qui relie l'enceinte principale (22) à une canalisation (64) faisant partie de l'accélérateur (65).

5. Laser selon l'une quelconque des revendications 1 à 4, caractérisé en ce qu'il comprend en outre des moyens (74) de récupération du faisceau d'électrons (45) après que celui-ci a quitté l'enceinte principale (22).

6. Laser selon la revendication 5, caractérisé en ce qu'il comprend en outre une autre enceinte de pompage différentiel (78) qui relie l'enceinte principale (22) aux moyens (74) de récupération du faisceau d'électrons (45).

7. Procédé d'utilisation d'un laser à électrons libres, comprenant :
- une enceinte principale, traversée par un faisceau d'électrons préalablement accélérés, et
- un onduleur qui crée dans cette enceinte principale un champ magnétique périodique avec lequel interagit le faisceau d'électrons,
procédé selon lequel on remplit l'enceinte principale d'un gaz formé d'atomes ou de molécules possédant au moins une raie de résonance à une fréquence déterminée, procédé caractérisé en ce qu'on accorde le laser sur cette raie de résonance, ce qui permet au laser de produire une lumière de fréquence proche de cette fréquence déterminée.

8. Procédé selon la revendication 7, caractérisé en ce qu'on accorde le laser sensiblement sur la longueur d'onde correspondant au maximum de la courbe représentant les variations de (nr-1) en fonction de la longueur d'onde au voisinage de la résonance, où nr est la partie réelle de l'indice de réfraction du gaz.

**FIG.1**

EP 0 410 863 A1

FIG. 2

FIG. 4

FIG. 3 A

FIG. 3 B

FIG. 5

EP 0 410 863 A1

FIG. 6

EP 0 410 863 A1

FIG. 7

**Office européen
des brevets**

**RAPPORT DE RECHERCHE
EUROPEENNE**

Numéro de la demande

**EP 90 40 2111**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | J. OPT. SOC. AM. B, vol. 6, no. 5, mai 1989, pages 1008-1014; R.H. PANTELL et al.: "Effects of introducing a gas into the free-electron laser" <br> * Page 1008, colonne 1, lignes 13-26; colonne 2, lignes 3-28; page 1009, colonne 1, lignes 26-29 * <br> – – – | 1-4,7 | H 01 S 3/09 |
| D,X | IEEE JOURNAL OF QUATUM ELECTRONICS, vol. 25, no. 1, janvier 1989, pages 84-87; M.B. REID et al.: "An ultraviolet gas-loaded free-electron laser" <br> * Page 84, colonne 2, lignes 6-8 * <br> – – – | 1-4,7 | |
| A | US-A-4 466 101 (N.C. SCHOEN) <br> * Figure 6 * <br> – – – – – | 1,5,6 | |

|  | DOMAINES TECHNIQUES RECHERCHES (Int. Cl.5) |
|---|---|
|  | H 01 S |

Le présent rapport de recherche a été établi pour toutes les revendications

| Lieu de la recherche | Date d'achèvement de la recherche | Examinateur |
|---|---|---|
| La Haye | 06 novembre 90 | GALANTI M. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
...................................................................
& : membre de la même famille, document correspondant